# EUROPÄISCHE PATENTSCHRIFT

(11) **EP 2 477 843 B1**
(45) Veröffentlichungstag und Bekanntmachung des Hinweises auf die Patenterteilung: **11.01.2017**
(21) Anmeldenummer: 10762863.8
(22) Anmeldetag: 15.09.2010
(51) Int. Cl.: B60N 2/68, B21D 26/14, B23K 20/06

(54) **STRUKTURELEMENT FÜR EIN KRAFTFAHRZEUG**
STRUCTURAL MEMBER FOR A MOTOR VEHICLE
MEMBRE STRUCTUREL POUR VÉHICULE À MOTEUR

(30) Priorität: 16.09.2009 DE 102009041428; 05.05.2010 DE 102010019577
(43) Veröffentlichungstag der Anmeldung: 25.07.2012
(73) Patentinhaber: Johnson Controls GmbH, 51399 Burscheid (DE)
(72) Erfinder: GROSS, Bernd, 40764 Langenfeld (DE); HÜBSCH, Christian, 40219 Düsseldorf (DE); HESTERBERG, Joshua, 40822 Mettmann (DE); ANGERMANN, Dirk, 42929 Wermelskirchen (DE); ECKENROTH, Dirk, 51469 Bergisch Gladbach (DE); FUNK, Stefan, 42799 Leichlingen (DE); DANNHEISIG, Andreas, 48336 Sassenberg (DE); WERNER, Hans-Georg, 40864 Langenfeld (DE); PELLENZ, Wolfgang, 53340 Meckenheim (DE); NDAGIJIMANA, Robin, 41469 Neuss (DE); WAYAL, Vikas, Kothrud Punie - 411038, Maharashtra (IN); KOPARDE, Praveen, 51381 Leverkusen (DE); OREN, Yaniv, 50996 Köln (DE); ZYNDA, Martin, 51399 Burscheid (DE); NUYAN, Vedat, 42287 Wuppertal (DE)
(74) Vertreter: Schwöbel, Thilo K.
(86) Internationale Anmeldenummer: PCT/EP2010/005667
(87) Internationale Veröffentlichungsnummer: WO 2011/032691

(56) Entgegenhaltungen:
- WO-A1-98/03797
- WO-A1-2004/058429
- DE-U1-202004 020 792
- SU-A1- 1 139 004
- US-A1- 2006 145 474
- US-B1- 6 389 697
- US-B1- 6 484 384
- US-B2- 6 908 024

## Beschreibung

### Stand der Technik

Die Erfindung geht aus von einem Strukturelement nach dem Oberbegriff des Anspruchs 1.

Solche Strukturelemente von Kraftfahrzeugen sind allgemein bekannt. Beispielsweise werden derartige Strukturelemente dadurch hergestellt, dass ein erstes Bauteil und ein zweites Bauteil in einem Überlappungsbereich formschlüssig miteinander verbunden werden, indem die Bauteile im Überlappungsbereich beispielsweise durch Druckfügen miteinander verbunden werden.

Diese Verfahren haben jedoch den Nachteil, dass die Bauteile sehr genau justiert werden müssen, wodurch ein großer Aufwand entsteht. Außerdem erfordern diese Verfahren einen vergleichsweise großen Überlappungsbereich, um beispielsweise eine geforderte Festigkeit der Verbindung zu gewährleisten.

Es war daher Aufgabe der vorliegenden Erfindung, ein Strukturelement für ein Kraftfahrzeug zur Verfügung zu stellen, das die Nachteile des Stands der Technik nicht aufweist.

### Offenbarung der Erfindung

Diese Aufgabe wird durch das erfindungsgemäße Strukturelement und das erfindungsgemäße Verfahren gelöst.

Das erfindungsgemäße Strukturelement und das erfindungsgemäße Verfahren gemäß den nebengeordneten Ansprüchen haben gegenüber dem Stand der Technik den Vorteil, dass die Bauteile ohne aufwendiges Justieren im Überlappungsbereich miteinander verbunden werden können. Weiterhin ist es vorteilhaft möglich, dass nur ein vergleichsweise kleiner Überlappungsbereich notwendig ist und dennoch eine stabile Verbindung erreicht werden kann. Die Herstellung der Verbindung erfolgt vorteilhaft sehr präzise.

Diese Vorteile werden durch ein erfindungsgemäßes Strukturelement gemäss Anspruch 1 erreicht.

Beim elektromagnetischen Pulsformverfahren wird die Kraftwirkung eines impulsförmigen Magnetfelds zur Beschleunigung und anschließender Verformung eines elektrisch leitfähigen Materials genutzt. Da das Magnetfeld elektrisch isolierende Materialien durchdringt, ist vorteilhaft auch eine Bearbeitung von leitfähigen Materialien möglich, die mit einem nichtleitenden Material beschichtet sind. Die Verformung erfolgt vorteilhaft ohne Rissbildung in den Oberflächen. Erzeugt wird das impulsförmige Magnetfeld durch eine Spule, die von einem Stromimpuls durchflossen wird. Das Magnetfeld induziert Wirbelströme im elektrisch leitfähigen Material und übt eine kurzzeitig sehr hohe Kraft aus, sodass sich das elektrisch leitfähige Material plastisch verformt, sobald die erzeugt Kraft die Fließgrenze des Materials überschreitet. Vorteilhaft ist das Verfahren berührungslos und in vergleichsweise kurzer Zeit durchführbar. Der Verformvorgang erfolgt vorteilhaft in vergleichsweise kurzer Zeit und verläuft sehr präzise, weil durch den sehr schnellen Verformvorgang nur eine minimale Rückfederung erfolgt. Dadurch wird es möglich, unterschiedliche Materialien berührungslos zu fügen und eine feste Verbindung herzustellen. Vorteilhaft entsteht bei diesem Vorgang keine Werkstoffbeeinflussung durch Wärme, sodass kein thermischer Verzug entsteht und kein Nachrichten notwendig ist. Vorteilhaft entsteht keine Wärmeeinflusszone wie bei thermischen Schweißverfahren, sodass kein Festigkeitsverlust im Verbindungsbereich bzw. im Überlappungsbereich besteht. Weiterhin stellt dieses Verfahren eine vergleichsweise große Wiederholgenauigkeit sicher.

Die Bauteile können aus jedem Werkstoff gefertigt sein, wobei das zweite Bauteil bevorzugt aus elektrisch leitendem Material, bevorzugt aus Aluminiummaterial, Magnesiummaterial oder Stahlmaterial, hergestellt ist. oder ein Material aus stoffschlüssigen Verbindungen unterschiedlicher Werkstoffe aufweist. Bevorzugt weisen die Bauteile ein Metallmaterial auf, wobei weiter bevorzugt ein Stahlmaterial oder ein Aluminiummaterial oder ein Magnesiummaterial verwendbar ist. Weiterhin ist es möglich, für das erste Bauteil einen faserverstärkten Kunststoff, bevorzugt einen kohlenstofffaserverstärkten Kunststoff (CFK) oder einen glasfaserverstärkten Kunststoff (GFK) zu verwenden. So ist es beispielsweise möglich, nur in besonders stark belasteten Bereichen hochfesten Stahl zu verwenden und in Bereichen, die geringeren Belastungen ausgesetzt sind, nur vergleichsweise leichte Materialien zu verwenden. Weiterhin ist es möglich, dass unterschiedliche Materialen miteinander kombiniert werden, beispielsweise das erste Bauteil aus hochfestem Stahl und das zweite Bauteil aus gewichtsparendem Aluminium.

Die Bauteile können jedes Querschnittsprofil aufweisen. Bevorzugt ist der Querschnitt zumindest im Überlappungsbereich ein geschlossenes Profil, bevorzugt kreisförmig, bevorzugt sechskantig oder achtkantig ausgebildet. Bevorzugt werden Rohre verwendet oder Profile mit Längskanten. Es sind aber auch Querschnittsprofile wie beispielsweise U-Profile, T-Profile oder Doppel-T-Profile möglich. Bevorzugt werden Flachprofile verwendet.

Die Bauteile können weiterhin eine vergleichsweise geringe Wandstärke aufweisen, wodurch vorteilhaft durch geringe Wandstärken Gewicht eingespart werden kann.

Weiterhin ist es mit dem erfindungsgemäßen Strukturelement vorteilhaft möglich, dass beispielsweise Rohrrahmen zur Verfügung gestellt werden können, die kleine Radien auch aus hochfesten Stählen aufweisen.

Gemäß einer bevorzugten Weiterbildung ist vorgesehen, dass die mindestens eine Formschlussausformung / Sicke eine in Sickenlängsrichtung variierende Sickentiefe aufweist. Dadurch ist vorteilhaft auf einfache Art und Weise eine besonders feste Verbindung, beispielsweise gegen Zug, Druck, Torsion, Biegung und Kombinationen davon,möglich.

Gemäß einer nicht beanspruchten Weiterbildung ist vorgesehen, dass die mindestens eine Formschlussausformung des ersten Bauteils im Überlappungsbereich als Sicke ausgebildet ist, wobei die Sicke parallel oder senkrecht zu einer Haupterstreckungsrichtung des ersten Bauteils angeordnet ist. Erfindungsgemäss ist die Sicke in einem Winkel zwischen 44° und 46°, bezüglich der Haupterstreckungsrichtung des ersten Bauteils angeordnet.

Gemäß einer weiteren bevorzugten Ausführungsform ist das zweite Bauteil mittels eines elektrisch leitenden Treibelements in die Formschlussausformung einformbar. Dadurch ist es vorteilhaft möglich, das zweite Bauteil in die Formschlussausformung des ersten Bauteils einzuformen, auch wenn das zweite Bauteil aus einem nichtleitenden oder nur gering leitendem Material wie z.B. Edelstahl besteht.

Ein weiterer Gegenstand der vorliegenden Erfindung ist ein Bauteil zur Verwendung als ein erstes Bauteil eines erfindungsgemäßen Strukturelements, wobei das Bauteil in einem Überlappungsbereich mindestens eine Formschlussausformung aufweist. Erfindungsgemäss wird die mindestens eine Formschlussausformung mittels eines elektromagnetischen Pulsformverfahrens hergestellt. Vorteilhaft ist es dadurch möglich, dass ohne zusätzliche Maschinen, wie z.B. eine Hydraulikpresse, in derselben Vorrichtung zur Durchführung des elektromagnetischen Pulsformverfahrens sowohl die Formschlussausformungen als auch das Strukturelement aus erstem und zweitem Bauteil herstellbar ist.

Ein weiterer Gegenstand der vorliegenden Erfindung ist ein Verfahren zur Herstellung eines Strukturelements nach Anspruch 1.

Ein weiterer, nicht beanspruchter Gegenstand ist eine Vorrichtung zur Herstellung eines Strukturelements, umfassend eine Spule zur Erzeugung eines magnetischen Feldes in einem Überlappungsbereich, ein erstes Bauteil mit mindestens einer Formschlussausformung im Überlappungsbereich und ein zweites Bauteil zur Einformung in die Formschlussausformung des ersten Bauteils, wobei das zweite Bauteil im Überlappungsbereich zwischen dem ersten Bauteil und der Spule angeordnet ist.

Ein weiterer, nicht beanspruchter Ggenstand ist eine Fahrzeugsitzstruktur (im Folgenden auch Hybridstrukturelement genannt) für einen Fahrzeugsitz, insbesondere für ein Kraftfahrzeug. Solche Strukturelemente sind beispielsweise in der Druckschrift WO 2009/056294 A1 beschrieben, auf die sich in dieser Offenbarung ausdrücklich bezogen wird. Dort werden Bauteile und Methoden vorgestellt, mit denen es möglich ist, ein Strukturelement, wie einen Fahrzeuglehnen- oder -sitzrahmen so zusammen zu bauen, dass weitgehend auf Gleichteile zurückgegriffen werden kann. Desweiteren wird die Verbindung unterschiedlicher Rahmenmaterialien untereinander beschrieben, eine sogenannte Hybridbauweise.

Das Dokument US-6389697B offenbart ein gattungsgemässes Strukturelement eines Kraftfahrzeuges, sowie ein Verfahren zur Herstellung eines solchen Strukturelementes. Aufgabe der vorliegenden Erfindung ist es, ein gattungsgemässes Strukturelement in Stahl-/Stahl- oder Stahl-/Leichtbauwerkstoffbauweise weiter zu standardisieren, um eine geringere Lagerhaltung und verminderte Montagekosten zu erreichen und die ein geringes Gewicht und dennoch eine hohe Festigkeit aufweist.

Die Aufgabe wird erfindungsgemäß mit einem Strukturelement nach Anspruch 1 und einem Verfahren nach Anspruch 5 gelöst.

Dieses Beispiel soll den Offenbarungsgehalt jedoch nicht einschränken und kann ebenso auf einen Kraftfahrzeugsitz in einer beliebigen Sitzreihe angewendet werden. Das Beispiel soll die Anwendung ebenso wenig auf ein Lehnenbauteil beschränken.

Vorteilhafte Ausgestaltungen und Weiterbildungen der Erfindung sind den Unteransprüchen, sowie der Beschreibung unter Bezugnahme auf die Zeichnungen entnehmbar.

Ausführungsbeispiele der vorliegenden Erfindung sind in den Zeichnungen dargestellt und in der nachfolgenden Beschreibung näher erläutert.

Kurze Beschreibung der Zeichnungen

Es zeigen
**Figuren 1 bis 5** schematische Darstellungen von beispielhaften Ausführungsformen des erfindungsgemäßen Strukturelements,
**Figur 6** eine schematische Darstellung eines Bauteils gemäß einer beispielhaften Ausführungsform der vorliegenden Erfindung,
**Figur 7** eine schematische Darstellung einer Vorrichtung gemäß einer beispielhaften Ausführungsform der vorliegenden Erfindung und
**Figuren 8 bis 12** weitere Ausführungsformen der vorliegenden Erfindung.

### Ausführungsform(en) der Erfindung

In den verschiedenen Figuren sind gleiche Teile stets mit den gleichen Bezugszeichen versehen und werden daher in der Regel auch jeweils nur einmal benannt bzw. erwähnt.

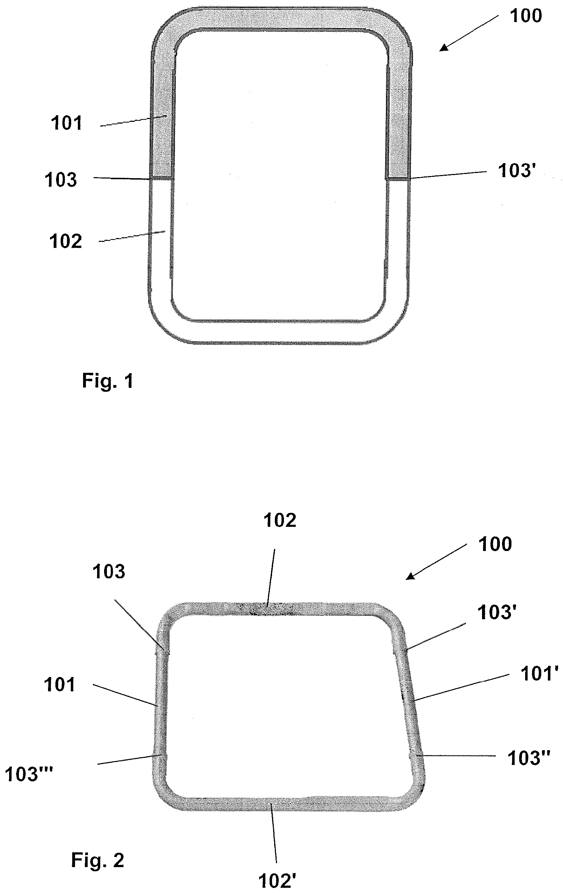

In **Fig. 1** ist schematisch das erfindungsgemässe Strukturelement dargestellt. Das Strukturelement 100 wird in Kraftfahrzeugen verwendet und wird beispielsweise als Rahmenstruktur für eine Rückenlehne und/oder für ein Sitzkissen eines Kraftfahrzeugsitzes verwendet. Das Strukturelement 100 weist ein erstes Bauteil 101 und ein zweites Bauteil 102 auf. Die Bauteile sind jeweils als U-Bügel ausgebildet. Bevorzugt weist das erste Bauteil 101 ein hochfestes Material wie beispielsweise ein Stahlmaterial oder ein faserverstärktes Kunststoffmaterial auf. Das zweite Bauteil 102 weist ein elektrisch leitendes Material auf, bevorzugt wird ein Leichtmetall wie Aluminium oder Magnesium sowie legierter Stahl oder Material aus stoffschlüssigen Verbindungen unterschiedlicher Werkstoffe verwendet. Zur Verbindung des ersten mit dem zweiten Bauteil werden die Bauteile in Überlappungsbereichen 103, 103' mittels eines elektromagnetischen Impulsformverfahrens formschlüssig oder form- und kraftschlüssig miteinander verbunden. Durch den Einsatz von Hybridstrukturen bestehend aus Blech- und Aluminiumprofilen ist eine wesentliche Gewichtsreduzierung möglich, wodurch weiterhin vorteilhaft Kohlendioxidemissionen reduziert werden können. Das Strukturelement 100 kann als Rohrrahmen aus unterschiedlichen Rohrprofilen mit verschiedenen Wandstärken, unterschiedlichen Durchmessern und unterschiedlichen Materialien (Stahl / Aluminium) sowie unterschiedlichen Materialeigenschaften bestehen. Der Rohrrahmen wird anforderungsgerecht konstruiert und es werden zum Beispiel nur in den Bereichen hochfeste Stahlprofile eingesetzt, in denen extrem hohe Kräfte auftreten. Dagegen können andere Bereiche, mit entsprechend geringeren Anforderungen zum Beispiel mit Aluminiumprofilen gestaltet werden. Dadurch wird es möglich, eine vergleichsweise gute Balance zwischen Gewicht, Crashperformance und Kosten zu generieren. Weiterhin ist es vorteilhaft möglich, bestimmte Radien in den Eckbereichen zu realisieren, ohne dass Risse entstehen. Durch den gezielten Ansatz des geeigneten Materials und den damit verbundenen Eigenschaften, kann die Qualität der Rohrrahmen hinsichtlich Herstellbarkeit, Toleranzempfindlichkeit, Spring-back Verhalten, etc. deutlich beeinflusst und verbessert werden. Diese beschriebenen Anforderungen und Eigenschaften an einen Rohrrahmen können mittels des elektromagnetischen Impulsformverfahrens realisiert werden. Dieses Verfahren macht es möglich, dass eine formschlüssige oder kraft- und formschlüssige Verbindung zwischen den beiden unterschiedlichen verwendeten Materialen (Aluminium / Stahl) prozesssicher hergestellt werden kann.

In **Fig. 2** ist das erfindungsgemässe Strukturelement 100 schematisch dargestellt. Das erste Bauteil 101, 101' ist als longitudinales Rohrstück ausgebildet, kann aber auch beispielsweise als abgewinkeltes Rohr ausgebildet sein,und das zweite Bauteil 102, 102' ist als U-Bügel ausgebildet. An den vier Überlappungsbereichen 103, 103', 103", 103'" ist jeweils das zweite Bauteil 102, 102' mittels elektromagnetischen Impulsformverfahrens auf das erste Bauteil 101, 101' aufgeformt. Im Übrigen wird auf die Figur 1 verwiesen.

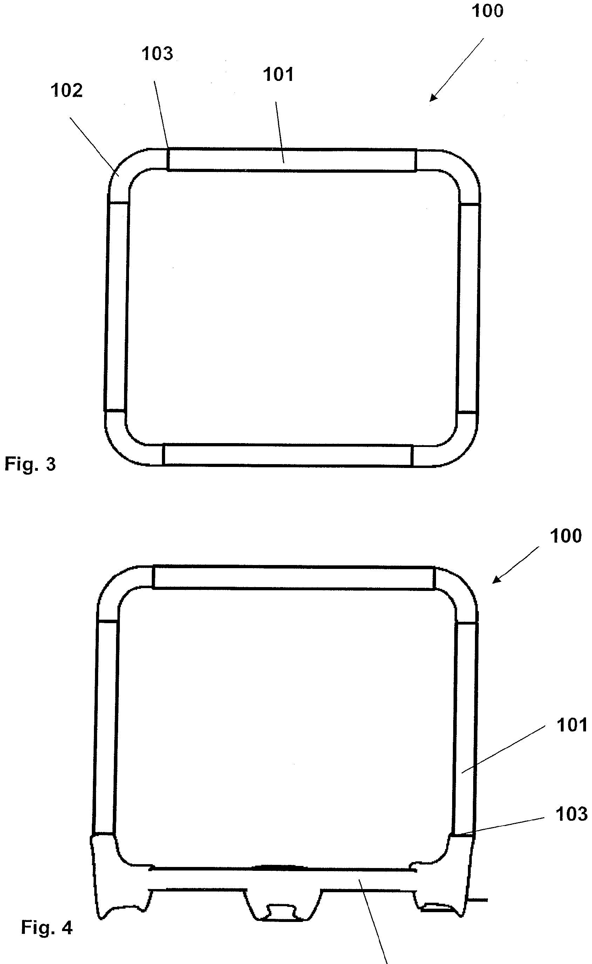

In **Fig. 3** ist das erfindungsgemässe Strukturelement 100 schematisch dargestellt. Das Strukturelement 100 weist vier longitudinale Rohrstücke, die aber auch beispielsweise als abgewinkeltes Rohr ausgebildet sein können, als erste Bauteile 101 aus einem Leichtmetall auf und vier Eckverbinder 102 aus hochfestem Stahl als zweite Bauteile 102 auf. Die ersten Bauteile 101 werden mittels elektromagnetischem Impulsformverfahren auf die Eckverbinder 102 aufgeformt. Vorteilhaft ist es möglich, dass die unterschiedlichsten Geometrien mit standardisierten Eckverbindern hergestellt werden können. Weiterhin ist es möglich, dass mehrere Verbindungen gleichzeitig hergestellt werden, wodurch vorteilhaft die Fertigungsdauer des Strukturelements erheblich verringert werden kann. Im Übrigen wird auf die Figur 1 verwiesen.

Alternativ ist es auch möglich, dass die longitudinalen Rohrstücke aus hochfestem Stahl oder aus einem faserverstärkten Material gefertigt sind und dass die Eckverbinder, die beispielsweise aus einem Leichtmetall gefertigt sind, auf die longitudinalen Rohrstücke mittels elektromagnetischem Impulsformverfahren aufgeformt werden.

In **Fig. 4** ist das erfindungsgemässe Strukturelement 100 schematisch dargestellt. Das Strukturelement 100 weist ein Press-/Gießteil 102 beispielsweise aus Aluminium auf, das im Überlappungsbereich 103 auf das hochfeste erste Bauteil 101 mittels elektromagnetischen Impulsformverfahrens aufgeformt wird. Im Übrigen wird auf die Figur 1 verwiesen.

Alternativ ist es auch möglich, dass das untere und oder obere Traversenbauteil aus einem hochfesten Material besteht und dass das Seitenteil, das aus einem Leichtmetall wie z.B. Aluminium oder Magnesium gefertigt ist, mittels elektromagnetischen Impulsformverfahrens auf das Traversenbauteil aufgeformt wird.

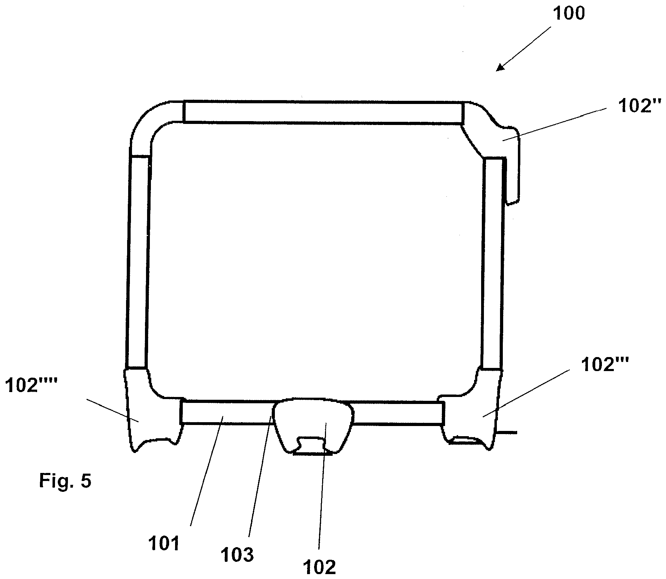

In **Fig. 5** ist das erfindungsgemässe Strukturelement 100 schematisch dargestellt. Das Strukturelement 100 weist Formteile wie z.B. Eckverbinder oder Brakets 102, 102", 102"', 102"" auf, die auf das Longitudinalrohr 101, welches aber auch beispielsweise als abgewinkeltes Rohr ausgebildet sein kann, mittels elektromagnetischen Impulsformverfahrens im Überlappungsbereich 103 aufgeformt werden. Die Formteile 102, 102", 102"', 102"" sind beispielsweise aus Stahl oder Aluminium gefertigt. Im Übrigen wird auf die Figur 1 verwiesen.

Alternativ ist es auch möglich, dass das Longitudinalrohr auf den Eckverbinder mittels elektromagnetischen Impulsformverfahrens im Überlappungsbereich aufgeformt wird. Der Eckverbinder kann dazu aus allen elektrisch leitfähigen und/oder nichtleitfähigen Materialien bestehen, das Longitudinalrohr kann aus jedem leitfähigen Material bestehen.

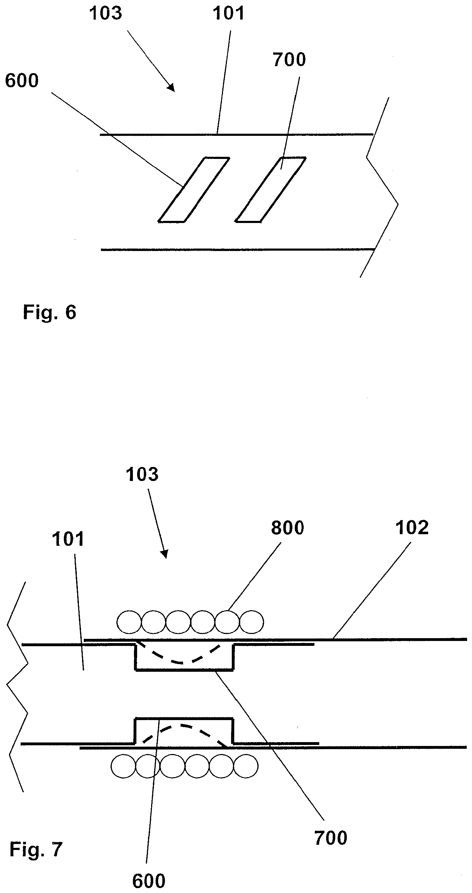

In **Fig. 6** ist schematisch der Überlappungsbereich 103 eines erfindungsgemäßen Bauteils gemäß einer beispielshaften Ausführungsform dargestellt, das als erstes Bauteil 101 im Sinne dieser Erfindung verwendet wird. Das erste Bauteil 101 weist im Überlappungsbereich 103 eine Formschlussausformung 600 und eine weitere Formschlussausformung 700 auf. Die Formschlussausformungen 600, 700 sind als länglich ausgebildete Eindrückungen bzw. Sicken ausgebildet, die sich parallel zueinander in der Wand des ersten Bauteils 101 erstrecken. Diese Ausführungsform ist nur beispielshaft dargestellt, es sind auch andere Ausgestaltungen der Formschlussausformungen 600, 700 oder auch eine andere Anzahl an Formschlussausformungen möglich, beispielsweise quer oder parallel zur Haupterstreckungsrichtung des ersten Bauteils 101.

In **Fig. 7** ist schematisch eine beispielhafte Ausführungsform der nicht beanspruchten Vorrichtung zur Herstellung eines erfindungsgemäßen Strukturelements 100 dargestellt. Im Überlappungsbereich 103 überlappt das zweite Bauteil 102 das erste Bauteil 101 und insbesondere die Formschlussausformung 600 und die weitere Formschlussausformung 700 des ersten Bauteils 101. In radialer Richtung außerhalb des ersten Bauteils 101 und zweiten Bauteils 102 ist eine Spule 800 angeordnet, sodass das zweite Bauteil 102 zwischen dem ersten Bauteil 101 und der Spule 800 angeordnet ist, wobei hier nur schematisch einige Wicklungen der Spule 800 dargestellt sind. Bei Durchführung des elektromagnetischen Impulsformverfahrens wird das zweite Bauteil 102 durch die mittels Stromfluss durch die Spule 800 elektromagnetisch erzeugte radial nach innen wirkende Kraft in die Formschlussausformungen 600, 700 eingedrückt (gestrichelt dargestellt), sodass eine formschlüssige oder form-und kraftschlüssige Verbindung zwischen dem ersten Bauteil 101 und dem zweiten Bauteil 102 entsteht. Alternativ ist es auch möglich, dass die Spule im Innern des zweiten Bauteils angeordnet ist, sodass die elektromagnetische Kraft radial nach außen wirkt und das zweite Bauteil in Formschlussausformungen des radial außerhalb des zweiten Bauteils angeordneten ersten Bauteils eingedrückt wird.

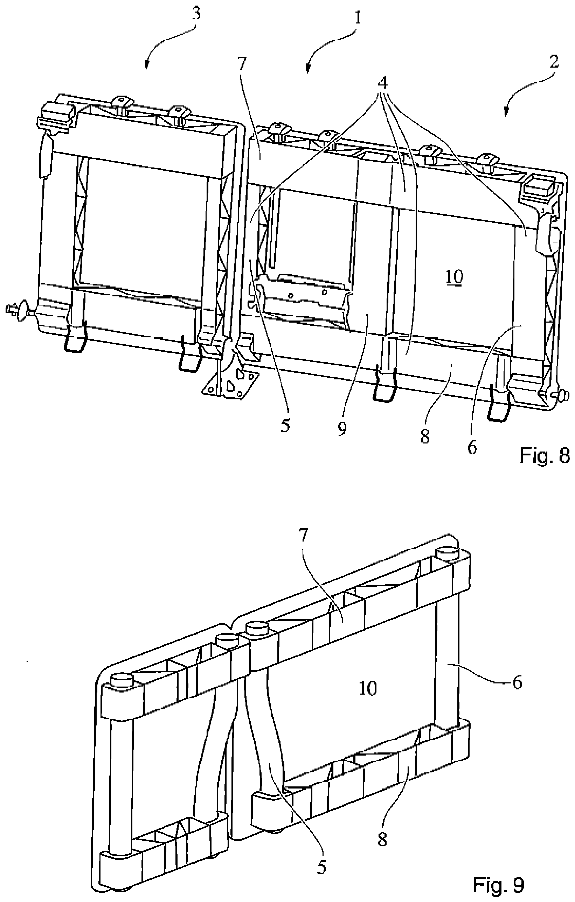

Ein weiteres Ausführungsbeispiel **(****Fig. 8****)** zeigt eine geteilte Rücksitzlehne 1, z.B. im Teilungsverhältnis 60% zu 40%. Anhand des größeren Lehnenteils 2 wird der Aufbau der Rahmenstruktur erklärt. Der Lehnenrahmen 4 besteht aus zwei Lehnenseitenteilen 5 und 6, einer oberen Quertraverse 7 sowie einer unteren Quertraverse 8. Ein zusätzliches Lehnenmittelteil 9 kann den Lehnenrahmen 4 weiter verstärken. Wie zu sehen ist, kann beim kleineren Lehnenteil 3 darauf verzichtet werden. Alle äusseren Rahmenstrukturteile 5, 6, 7 und 8 sind aus einem Leichtbauwerkstoff (z.B. Aluminium) als Strangpressprofile hergestellt, deren Versteifungsrippen quer zur Längsachse der Rahmenstrukturteile ausgerichtet sind. Dabei können die Versteifungsrippen in beliebigen Winkeln bezüglich der Haupterstreckungsebene der Rahmenstrukturteile angeordnet sein. Dem entgegenstehend wird das Lehnenmittelteil 9 aus einem Leichtbauwerkstoff (z.B. Aluminium oder Magnesium) als Strangpressprofil hergestellt, dessen Wandungen parallel zur Längsachse der Rahmenstrukturteile ausgerichtet sind. Die Rückenschale 10 besteht im Ausführungsbeispiel aus einem hochfesten Stahl. Alternativ kann sie auch aus Kunststoff, vorzugsweise mit Fasern (CFK oder GFK) verstärkt, gefertigt sein. Das CFK/GFK kann auch als flächiges Halbzeug (Platte) basierend auf einer thermoplastischen Matrix sein. Die Verstärkung ist ein Gewebe oder Gelege (Endlosfasern: Faserlänge entspricht Bauteilgröße) aus Glas, Carbon, Aramid oder einer Mischform Die Rückenschale 10 und der Lehnenrahmen 4 sowie die Rahmenstrukturteile 5, 6, 7, 8 und 9 sind bevorzugt stoffschlüssig, besonders bevorzugt durch Kleben mittels einer 1 oder 2 Komponenten sowie eines Klebetapes miteinander verbunden.

Ein weiteres Ausführungsbeispiel zeigt **Fig. 9****.** Hier bestehen die Lehnenseitenteile 5 und 6 aus Stahlrohrprofilen, die im Verbund mit der oberen Quertraverse 7 sowie der unteren Quertraverse 8 jeweils als Strangpressprofil aus Leichtbauwerkstoff den Lehnenrahmen 4 ergeben. Dieser könnte derart verstärkt ausgebildet werden, dass hier auf ein Lehnenmittelteil 9 verzichtet werden kann. Bei dieser Materialpaarung kommt als stoffschlüssiges Verbindungsverfahren wie zuvor das Kleben in Frage, aber z.B. auch das CMT-Schweißen (Cold Metal Transfer), das es erlaubt, die Aluminiumteile mit den verzinkten Stahlbauteilen zu verbinden.

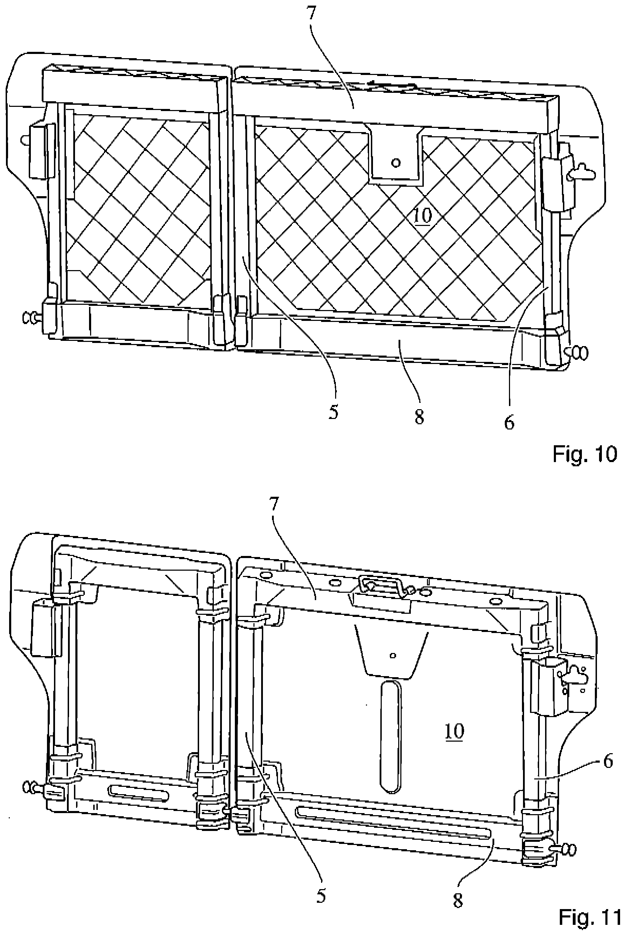

Ein ähnlicher Aufbau ist im Ausführungsbeispiel nach **Fig. 10** gezeigt. Er unterscheidet sich vom vorherigen Ausführungsbeispiel durch die Verwendung von hochfesten Rechteckstahlrohrprofilen für die Lehnenseitenteile 5 und 6.

Einen weiteren, ganz besonders bevorzugten konstruktiven Aufbau einer Lehnenrahmenstruktur zeigt die **Fig. 11****.** Hierbei setzt sich der Lehnenrahmen 4 aus Lehnenseitenteilen 5 und 6 aus Rechteckstahlrohrprofilen zusammen mit Quertraversen 7 und 8 z.B. aus Aluminium Tiefzieh- oder Pressprofilen. Hierbei werden in die dreidimensional geformten Aluminium-Quertraversen bereits Aufnahmen für die Rechteckstahlrohrprofile angeformt.

Allen Ausführungsbeispielen gemeinsam ist, dass auch andere Materialkombinationen als die beschriebenen denkbar sind. So können die Lehnenseitenteile 5 und 6 aus Leichtbauwerkstoff (z.B. Aluminium oder Magnesium), Stahl (z.B. hochfest) oder Kunststoff bestehen. Dasselbe gilt für die Quertraversen 7 und 8. Diese Materialien können auch für die Rückenschale 10 vorgesehen werden. Dementsprechend sind auch unterschiedliche, bedarfsgerechte Verbindungstechniken anwendbar. Neben den bereits genannten Verfahren kann alternativ oder in Kombination auf stoff-, form- und/oder kraftschlüssige Verbindungstechniken zurückgegriffen werden, wie z.B. Schweißen (z.B. MIG), CMT-Schweißen (Cold Metal Transfer - bei Aluminium-Stahl-Kombinationen), Steck-/Schraubverbindungen, Knotenelementverbindungen (z.B. Al-Druckgussknoten), Nietverbindungen, Durchsetzfügen ("toxen", "clinchen"), Cold Roll-Forming oder Pressverbindungen.

Gemäß einer weiteren Ausführungsform ist es optional möglich, dass nach einem Klebeprozess die Bauteile durch spezielle, hochfeste Tacker-Klammern, die bevorzugt aus Edelstahl gefertigt sind, miteinander verbunden werden. Weiterhin bevorzugt ist die Verbindung der Bauteile ausschließlich durch den Einsatz von Klammern. Alternativ oder optional ist es weiterhin bevorzugt möglich, nach dem Kleberauftrag die Bauteile durch eine Laschenverbindung, zumindest für den Weitertransport, miteinander zu koppeln. Vorteilhaft wird durch diese Verbindungen eine zusätzliche Sicherung der Bauteile zueinander ermöglicht. Bevorzugt kann als Sicherungsmittel auf stoff-, form- und/oder kraftschlüssige Verbindungstechniken zurückgegriffen werden, wie z.B. Schweißen (z.B. MIG), CMT-Schweißen (Cold Metal Transfer - bei Aluminium-Stahl-Kombinationen), Steck-/Schraubverbindungen, Knotenelementverbindungen (z.B. Al-Druckgussknoten), Nietverbindungen, Durchsetzfügen ("toxen", "clinchen"), Cold Roll-Forming oder Pressverbindungen.

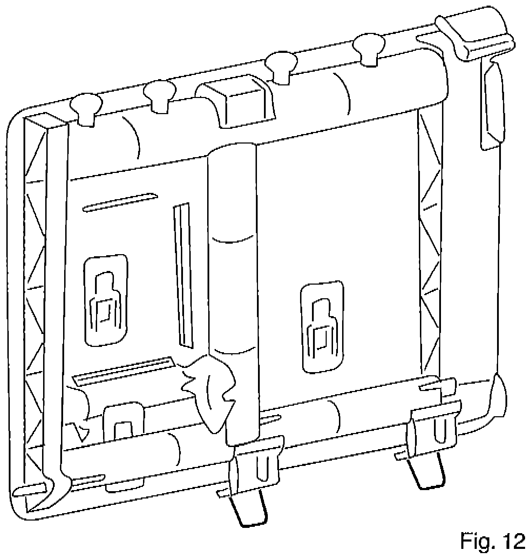

In die Lehnenrahmenstruktur lassen sich auf einfache Weise alle denkbaren und/oder notwendigen Bauteile integrieren, wie die **Fig. 12** zeigt. Hier sind z.B. Komponenten für die Lehnenneigungsfunktion, Durchlademöglichkeit und Kindersitzbefestigung (Isofix, Top Tether) oder Aufnahmen für Sicherheitsgurtrollen, Kopfstützen und Armlehnen gezeigt.

**Bezugszeichenliste**

| | |
|---|---|
| 1 | geteilte Rücksitzlehne |
| 2 | größerer Lehnenteil |
| 3 | kleinerer Lehnenteil |
| 4 | Lehnenrahmen |
| 5,6 | Lehnenseitenteile |
| 7 | oberer Quertraverse |
| 8 | untere Quertraverse |
| 9 | Lehnenmittelteil |
| 10 | Rückenschale |
| 100 | Strukturelement |
| 101, 101' | erstes Bauteil |
| 102, 102', 102", 102"', 102"" | zweites Bauteil |
| 103, 103', 103", 103'" | Überlappungsbereich |
| 600 | Formschlussausformung |
| 700 | weitere Formschlussausformung |
| 800 | Spule |

## Patentansprüche

1. Strukturelement (100) eines Kraftfahrzeugs, insbesondere eines Kraftfahrzeugsitzes, wobei das Strukturelement (100) ein erstes Bauteil (101) und ein zweites Bauteil (102) aufweist, wobei das erste Bauteil (101) und das zweite Bauteil (102) in einem Überlappungsbereich (103) eine form- und kraftschlüssige Verbindung aufweisen, wobei das erste Bauteil (101) im Überlappungsbereich (103) einen polygonartigen Querschnitt aufweist, wobei die Verbindung im Überlappungsbereich (103) mit einem elektromagnetischen Pulsformverfahren hergestellt ist, **dadurch gekennzeichnet, dass** das erste Bauteil (101) im Überlappungsbereich (103) mindestens drei Formschlussausformungen (600, 700) aufweist, wobei die mindestens drei Formschlussausformungen (600, 700) in einem gleichmäßigen Umfangswinkelabstand voneinander angeordnet sind, wobei das zweite Bauteil (102) mittels eines elektrisch leitenden Treibelements in die mindestens drei Formschlussausformungen (600, 700) eingeformt ist, wobei die mindestens drei Formschlussausformungen (600, 700) des ersten Bauteils (101) im Überlappungsbereich (103) als Sicken ausgebildet sind, wobei die Sicken in einem Winkel zwischen 44° und 46° bezüglich einer Haupterstreckungsrichtung des ersten Bauteils (101) angeordnet sind.

2. Strukturelement (100) nach Anspruch 1, **dadurch gekennzeichnet, dass** das zweite Bauteil (102) ein elektrisch leitfähiges Material, bevorzugt ein Stahlmaterial, ein Aluminiummaterial oder ein Magnesiummaterial oder ein Material aus stoffschlüssigen Verbindungen unterschiedlicher Werkstoffe, aufweist.

3. Strukturelement (100) nach einem der vorhergehenden Ansprüche, **dadurch gekennzeichnet, dass** die Sicken in Sickenlängsrichtung variierende Sickentiefe aufweisen.

4. Strukturelement (100) nach einem der vorhergehenden Ansprüche, **dadurch gekennzeichnet, dass** eine Formschlussausformung (600) der mindestens drei Formschlussausformungen (600, 700) und eine weitere Formschlussausformung (700) der mindestens drei Formschlussausformungen (600, 700) als Sicken mit jeweils einer Sickenlängsrichtung ausgebildet sind, wobei die Sickenlängsrichtungen parallel zueinander angeordnet sind.

5. Verfahren zur Herstellung eines Strukturelements (100) nach einem der Ansprüche 1 bis 4, wobei in einem ersten Schritt das zweite Bauteil (102) im Überlappungsbereich (103) zwischen dem ersten Bauteil (101) und einer Spule (800) angeordnet wird, wobei die Spule (800) in radialer Richtung außerhalb des ersten Bauteils (101) und zweiten Bauteils (102) angeordnet wird, wobei das zweite Bauteil (102) zwischen dem ersten Bauteil (101) und der Spule (800) angeordnet wird, wobei in einem zweiten Schritt im Überlappungsbereich (103) mittels der Spule (800) ein elektromagnetisches Feld erzeugt wird, wobei eine radial nach innen wirkende Kraft elektromagnetisch erzeugt wird, wobei in einem dritten Schritt im Überlappungsbereich (103) das zweite Bauteil (102) in eine Formschlussausformung (600) des ersten Bauteils eingeformt wird, wobei das zweite Bauteil (102) durch die elektromagnetisch erzeugte radial nach innen wirkende Kraft in die Formschlussausformung (600) eingedrückt wird.

## Claims

1. A structural element (100) of a vehicle, especially of a vehicle seat, wherein the structural element (100) comprises a first component (101) and a second component (102), wherein the first component (101) and the second component (102) comprise a positive and a non-positive connection in an overlapping region (103), wherein the first component (101) comprises a polygonal cross-section in the overlapping region (103), wherein the connection in the overlapping region (103) is manufactured with an electromagnetic-pulse-forming process, **characterised in that** the first component (101) comprises at least three positive-fit indentations (600, 700) in the overlapping region (103), wherein the at least three positive-fit indentations (600, 700) are arranged with a uniform angular distance from one another around the circumference, wherein the second component (102) is moulded into the at least three positive-fit indentations (600, 700) by means of an electrically conductive drive element, wherein the at least three positive-fit indentations (600, 700) in the overlapping region (103) of the first component (101) are constituted as beads, wherein the beads are arranged at an angle between 44° and 46° relative to a principal direction of extension of the first component (101).

2. The structural element (100) according to claim 1, **characterised in that** the second component (102) comprises an electrically conductive material, preferably a steel material, and aluminium material or magnesium material or material made from materially bonded connections of different materials.

3. The structural element (100) according to any one of the preceding claims, **characterised in that** the beads comprise varying bead-depth in the longitudinal direction of the bead.

4. The structural element (100) according to any one of the preceding claims, **characterised in that** one positive-fit indentation (600) of the at least three positive-fit indentations (600, 700) and one further positive-fit indentation (700) of the at least three positive-fit indentations (600, 700) are each constituted as beads with a longitudinal direction of the bead, wherein the longitudinal directions of the beads are arranged parallel to one another.

5. A method for the manufacture of structural element (100) according to any one of claims 1 to 4,
wherein, in a first step, the second component (102) is arranged in the overlapping region (103) between the first component (101) and a coil (800), wherein the coil (800) is arranged in the radial direction outside the first component (101) and the second component (102), wherein the second component (102) is arranged between the first component (101) and the coil (800), wherein, in a second step, an electromagnetic field is generated in the overlapping region (103) by means of the coil (800), wherein a radially inwardly acting force is generated electromagnetically, wherein, in a third step, the second component (102) is moulded in the overlapping region (103) into a positive-fit indentation (600) of the first component, wherein the second component (102) is pressed into the positive-fit indentation (600) by the electromagnetically generated, radially inwardly acting force.

## Revendications

1. Elément de structure (100) d'un véhicule à moteur, notamment un siège de véhicule, cet élément de structure (100) comportant une première partie (101) et une deuxième partie (102), la première partie (101) et la deuxième partie (102) présentant un assemblage par complémentarité de forme ou un assemblage à force dans une zone de chevauchement (103), où la première partie (101) dans la zone de chevauchement (103) est de section transversale polygonale, où l'assemblage dans la zone de chevauchement (103) fait appel à un procédé d'impulsions électromagnétiques, **caractérisé en ce que** la première partie (101) dans la zone de chevauchement (103) comporte au moins trois moulures de complémentarité de forme (600, 700), où lesdites au moins trois moulures de complémentarité de forme (600, 700) sont agencées à une distance angulaire périphérique égale l'une par rapport à l'autre, où la seconde partie (102) est insérée dans lesdites au moins trois moulures de complémentarité de forme (600, 700) au moyen d'un élément de poussée électroconducteur, où lesdites trois moulures de complémentarité de forme (600, 700) de la première partie (101) sont en forme de nervures dans la zone de chevauchement (103), où les nervures sont agencées dans un angle compris entre 44° et 46° par rapport à une direction d'extension principale de la première partie (101).

2. Elément de structure (100) selon la revendication 1, **caractérisé en ce que** la seconde partie (102) comporte un matériau électroconducteur, de préférence un matériau d'acier, un matériau d'aluminium ou un matériau de magnésium ou bien un matériau composé d'assemblage à complémentarité de matériaux, de différents matériaux.

3. Elément de structure (100) selon l'une quelconque des revendications précédentes, **caractérisé en ce que** les nervures présentent sont d'épaisseur variable dans la direction de la longueur.

4. Elément de structure (100) selon l'une quelconque des revendications précédentes, **caractérisé en ce qu'**une moulure de complémentarité de forme (600) desdites au moins trois moulures de complémentarité de forme (600, 700) et une autre moulure de complémentarité de forme (700) desdites au moins trois moulures de complémentarité de forme (600, 700) sont en forme de nervures avec respectivement une direction longitudinale des nervures, lesdites directions longitudinales des nervures étant parallèles l'une à l'autre.

5. Procédé de fabrication d'un élément de structure (100) selon l'une quelconque des revendications 1 à 4,
où dans une première étape la seconde partie (102) est agencée dans la zone de chevauchement (103) et la première partie (101) et une bobine (800), où la bobine (800) est agencée dans la direction radiale à l'extérieur de la première partie (101) et de la seconde partie (102), où la seconde partie (102) est agencée entre la première partie (101) et la bobine (800), où dans une deuxième étape un champ électromagnétique est généré dans la zone de chevauchement (103) au milieu de la bobine (800), où une force exercée radialement vers l'intérieur est générée de façon électromagnétique, où dans une troisième étape dans la zone de chevauchement (103), la seconde partie (102) est insérée dans une moulure de complémentarité de forme (600) de la première partie, où la seconde partie (102) est comprimée pour pénétrer dans la moulure de complémentarité de forme (600) par la force générée de façon électromagnétique et exercée radialement vers l'intérieur.
